# EUROPEAN PATENT SPECIFICATION

(11) **EP 4 494 932 B1**
(45) Date of publication and mention of the grant of the patent: **13.05.2026**
(21) Application number: 24189379.1
(22) Date of filing: 18.07.2024
(51) Int. Cl.: B60N 2/01, B60N 2/015, B60N 2/90, B60N 2/75, B60N 2/30

(54) **COCKPIT FOR A MOTOR VEHICLE AND METHOD FOR THE RECONFIGURATION OF A COCKPIT**
COCKPIT FÜR EIN KRAFTFAHRZEUG UND VERFAHREN ZUR REKONFIGURATION EINES COCKPITS
HABITACLE DE VÉHICULE AUTOMOBILE ET PROCÉDÉ DE RECONFIGURATION D'UN HABITACLE

(30) Priority: 20.07.2023 IT 202300015279
(43) Date of publication of application: 22.01.2025
(73) Proprietor: FERRARI S.p.A., 41100 Modena (IT)
(72) Inventor: CONIGLIARO, Vito, 41100 Modena (IT); DE PAOLI, Alessandro Paolo, 41100 Modena (IT); GRANJARD, Thomas, 41100 Modena (IT); TAYLOR, Daniel Martin, 41100 Modena (IT)
(74) Representative: Studio Torta S.p.A.

(56) References cited:
- WO-A1-2007/006122
- US-A1- 2011 012 386

## Description

### CROSS-REFERENCE TO RELATED APPLICATIONS

This patent application claims priority from Italian patent application no. 102023000015279 filed on July 20, 2023.

### TECHNICAL FIELD

This invention relates to a cockpit for a motor vehicle and a method for reconfiguring the cockpit.

### BACKGROUND

Motor vehicles comprise, in a known way:
- a passenger compartment defining a body;
- multiple wheels;
- a steering wheel arranged inside the passenger compartment which can be driven by a driver to steer the front wheels and thus enable the motor vehicle to follow a curved trajectory; and
- pedals comprising an accelerator and a brake that the driver can activate to increase the drive torque or exert a braking torque on the wheels respectively, so as to control the speed of the motor vehicle.

The passenger compartments of the motor vehicles normally intended for use on the road implement a so-called "two-seater" configuration.

In this "two-seater" configuration, the passenger compartment comprises a pair of front seats intended to be occupied by a driver and a passenger respectively, and arranged next to each other along a transverse direction of the motor vehicle orthogonal to a longitudinal direction defining a normal forward direction of the motor vehicle.

The steering wheel and the pedals are located opposite the driver's seat and are basically arranged in a left or right front corner of the vehicle.

With particular reference to sports motor vehicles, passenger compartments are known that implement the so-called "single-seater" configuration.

In this "single-seater" configuration, the passenger compartment comprises a single front seat arranged in a central position opposite the steering wheel and the pedals or passenger seats arranged to the side and/or set back from the central seat.

There is a need in the sector to provide motor vehicles that enable simple and easy reconfiguration between the above-mentioned "single-seater" and "two-seater" configurations. An example of a seating system can be seen in WO2007/006122A1.

### SUMMARY

The purpose of this invention is to produce a cockpit, which makes it possible to meet the need mentioned above.

The above-mentioned purpose is achieved with this invention, as it relates to a cockpit according to what is defined in claim 1.

This invention also relates to a method for reconfiguring a cockpit according to what is defined in claim 11.

### BRIEF DESCRIPTION OF THE DRAWINGS

In order to better understand this invention, two nonlimiting preferred embodiments thereof will now be described by way of example with reference to the accompanying drawings, in which:
- Figure 1 is a perspective view of a motor vehicle comprising a first embodiment of a cockpit produced according to the precepts of this invention with parts removed for clarity;
- Figure 2 is a perspective view on a very enlarged scale of the first embodiment of the cockpit in Figure 1, with parts removed for clarity and, in a first, "two-seater" operating configuration;
- Figure 3 is a perspective view on a very enlarged scale of the first embodiment of the cockpit in Figure 2, with parts removed for clarity and, in a second, "single-seater" operating configuration;
- Figure 4 is a perspective view on a very enlarged scale of a second embodiment of the cockpit in Figures 1 and 2, with parts removed for clarity and in the first, "two-seater" operating configuration; and
- Figure 5 is a perspective view on a very enlarged scale of the second embodiment of the cockpit in Figure 1, with parts removed for clarity and in the second, "single-seater" operating configuration.

### DESCRIPTION OF EMBODIMENTS

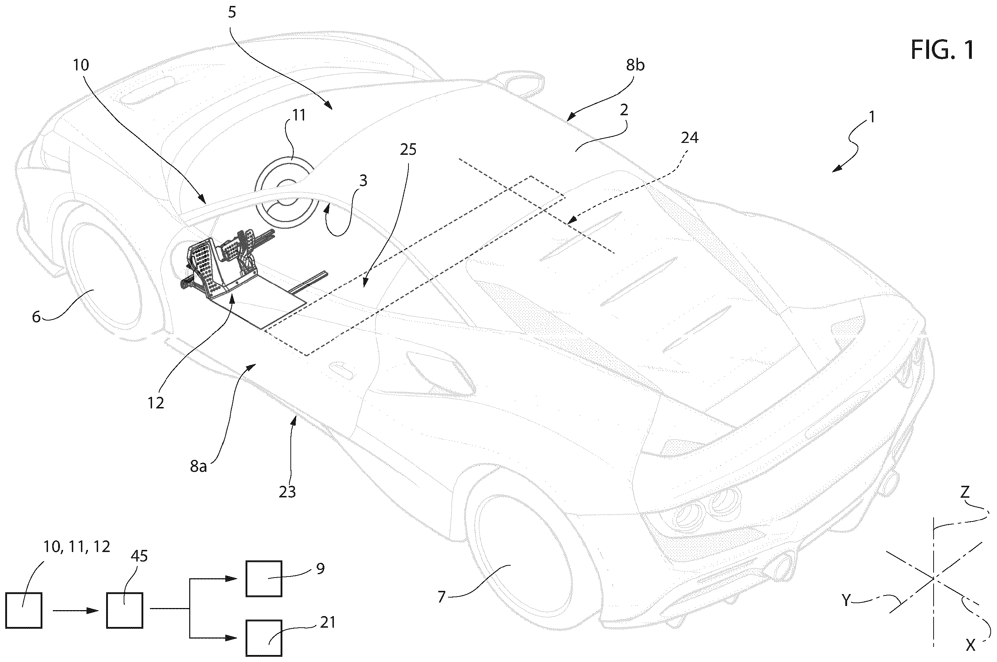

With reference to Figure 1, reference number 1 indicates a motor vehicle comprising a body 2 defining a passenger compartment 3.

It should be specified that, below in this description, expressions such as "above", "below", "in front of", "behind" and the like are used with reference to the normal movement of the motor vehicle 1.

It is also possible to define:
- a longitudinal axis X integral with the motor vehicle 1, arranged, in use, horizontal and parallel to a normal forward moving direction of the motor vehicle 1;
- a transversal axis Y integral with the motor vehicle 1, arranged, in use, horizontal and orthogonal to the axis X; and
- an axis Z integral with the motor vehicle 1, arranged, in use, vertical and orthogonal to the axes X, Y.

The motor vehicle 1 also comprises (Figure 1):
- a pair of front wheels 6 and a pair of back wheels 7;
- a known engine 9 only schematically illustrated in Figure 1 and operationally connected to the wheels 6 and/or 7 to exert drive torque on the wheels 6 and/or 7; and
- a brake system 21, also only schematically illustrated, in Figure 1 that can be driven to exert a braking torque on the wheels 6, 7.

The motor vehicle 1 also comprises (Figure 1):
- a windscreen 5 delimiting the passenger compartment 3 at the front; and
- a pair of doors 8a, 8b hinged to the body 2 that can be moved between a closed position wherein they delimit the passenger compartment 3 to the side and prevent entry into/exit from the passenger compartment 3 and an open position wherein they enable entry into/exit from the passenger compartment 3.

The body 2 also comprises a pair of door sills 23, 24 with longitudinal ends opposite each other. The door sills 23, 24 delimit the passenger compartment 3 and are adjacent to corresponding doors 8a, 8b when the doors 8a, 8b are in the respective closed positions.

The motor vehicle 1 also comprises control members 10 arranged in the passenger compartment 2 that the driver can activate to set a forward trajectory of the motor vehicle 1 with a desired speed.

In a known way, the control members 10 comprise:
- a steering wheel 11 arranged inside the passenger compartment 2 that the driver can activate; and
- pedals 12 also arranged inside the passenger compartment 2 that the driver can activate.

The control members 10 are connected to the engine 9, to the brake system 21, and to the wheels 6 and/or 7 implementing a technology known in the sector as "drive by wire".

In this description, the term "drive by wire" mode means that the steering wheel 11 does not have physical or mechanical connections with the wheels 6, 7.

The motor vehicle 1 also comprises a control unit 45 (Figure 1) programmed to receive, as input, the actions requested at the steering wheel 11 and pedals 12 and to generate, as output, control signals for the engine 9 and the brake system 21.

The passenger compartment 3 houses a front cockpit 25, only schematically illustrated in Figure 1, in a known way.

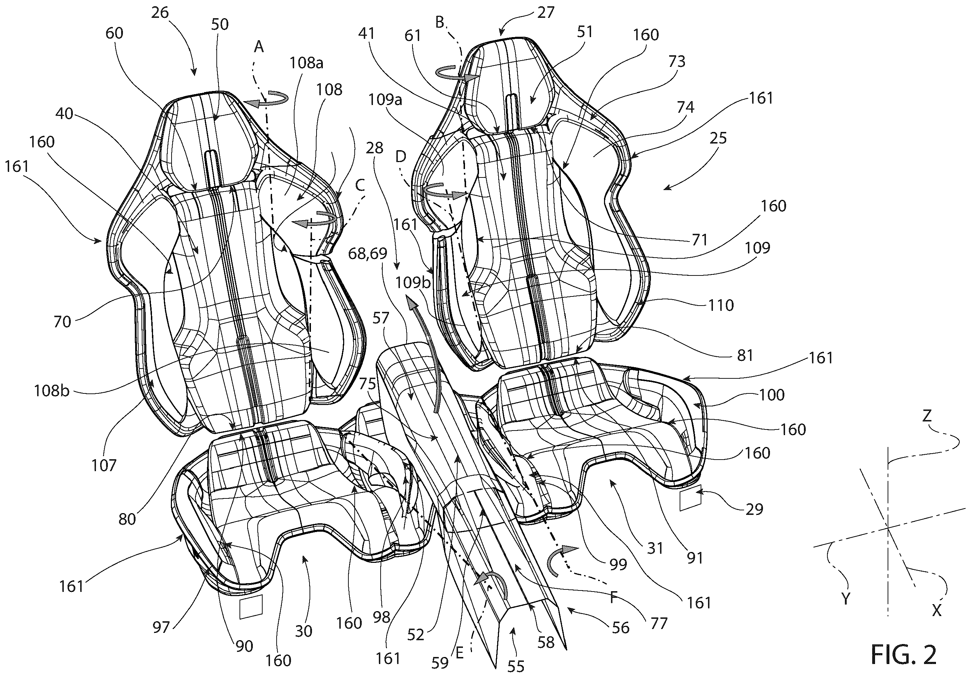

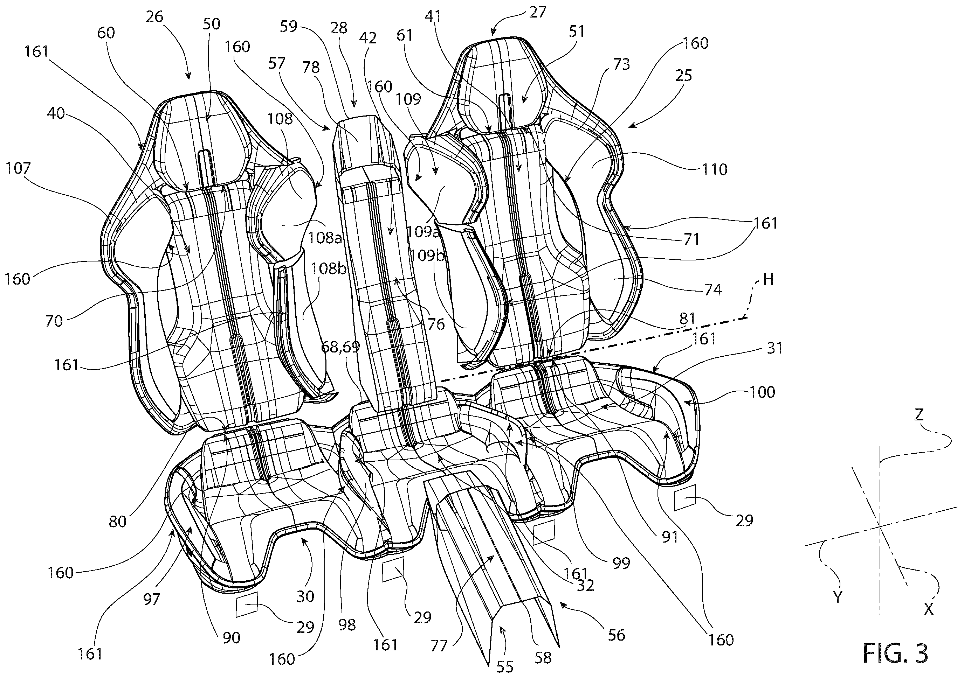

The cockpit 25 can be selectively moved between:
- a first, "two-seater" configuration illustrated in Figure 2, wherein it defines a seat 27 for a driver and a seat 26 for a passenger arranged next to each other and spaced apart along their axis Y; and
- a "single-seater" configuration illustrated in Figure 3, wherein it defines a single seat 28 for the driver.

With particular reference to Figures 2 and 3, the cockpit 25 comprises:
- a frame 29 (only schematically illustrated in Figure 2) fixed to the body 2;
- a pair of seat cushions 30, 31 next to each other and spaced apart along the axis Y;
- a pair of backrests 40, 41 next to each other and spaced apart along the axis Y; and
- a pair of headrests 50, 51 next to each other and spaced apart along the axis Y.

Each seat cushion 30, 31 is connected with a corresponding backrest 40, 41 and a corresponding headrest 50, 51.

Each backrest 40, 41 comprises, in particular:
- a corresponding upper edge 60, 61 extended along the axis Y and connected to a lower edge 70, 71 of the corresponding headrest 50, 51; and
- a corresponding lower edge 80, 81 extended along the axis Y and connected to a rear and upper edge 90, 91 of the corresponding seat cushion 30, 31.

The cockpit 25 also comprises:
- a central tunnel 55 interposed between the seats 26, 27 along the axis Y;
- multiple, four in the example illustrated, sides 97, 98; 99, 100; and
- multiple, four in the example illustrated, sides 107, 109; 109, 110 arranged above the corresponding sides 97, 98; 99, 100.

The central tunnel 55 is interposed between the sides 98, 99 along the axis Y when the cockpit 25 is in the first, "two-seater" configuration.

The central tunnel 55 is extended along the axis X and defines an armrest 52 shared by the driver and passenger in their respective seats 27, 26 when the cockpit is in the first configuration.

The sides 97, 98; 99, 100 are arranged on opposite sides of the corresponding seat cushions 30; 31 with reference to the axis Y.

The sides 107, 108; 109, 110 are arranged on opposite sides of the corresponding backrest 40; 41 with reference to the axis Y.

In particular, each side 97, 98; 99, 100; 107, 108; 109, 110 comprises:
- a corresponding edge 160 fixed to the corresponding seat cushion 30; 31 or backrest 40; 41; and
- a corresponding free edge 161 opposite the corresponding edge 160.

More specifically, the sides 97, 107 are respectively fixed to the seat cushion 30 and to the backrest 40.

The sides 100, 110 are respectively fixed to the seat cushion 31 and to the backrest 41.

The sides 97, 98; 99, 100; 107, 108; 109, 110 diverge from each other, moving from the respective edge 160 towards the respective edge 161 in the first configuration of the cockpit, so as to enable the driver to be comfortably accommodated within the seat 27 and the passenger within their seat 26.

The side 100 and the side 110 extend at the front of the corresponding seat cushion 40 and backrest 41, moving from the corresponding edge 160 towards the corresponding edge 161.

Each backrest 40, 41 is placed between a corresponding seat cushion 30, 31 and a corresponding headrest 50, 51.

In the first, "two-seater" configuration, the seat 26 comprises the seat cushion 30, the backrest 40, and the headrest 50.

The seat 27 comprises the seat cushion 31, the backrest 41, and the headrest 51.

In the example illustrated in Figures 2 and 3, the sides 107, 108; 109, 110 each comprise a support 73 and a cushion 74 supported by the support 73.

Advantageously, the cockpit 25 can be shifted into a second, "single-seater" configuration, wherein it defines a single seat 28 for the driver comprising a seat cushion 32 and a backrest 42; the central tunnel 55 comprises, in turn, a support structure 56 fixed in relation to the seat cushions 30, 31 and an arm 57 that can be moved between:
- a first position (Figure 2) assumed when the cockpit 25 is in the first configuration, wherein it is folded on the support structure 56 and defines the armrest 52; and
- a second position (Figure 3) assumed when the cockpit 25 is in the second configuration, wherein it is raised in relation to the support structure 56 and defines the backrest 32 of the seat 28;
the support structure 56 defines the seat cushion 32 of the seat 28 when the cockpit 25 is in the second configuration.

More specifically, the arm 57 can be rotated in relation to the support structure 56 around an axis H parallel to the axis Y.

The support structure 56 and the arm 57 comprise, in turn:
- respective front ends 58, 59; and
- respective rear ends 68, 69, hinged together and opposite the corresponding ends 58, 59 along the axis X.

The distance between the ends 58, 68 of the support structure 56 is greater than the distance between the ends 59, 69 of the arm 57 measured parallel to the axis X and in the first configuration of the arm 57 itself.

In particular, the end 58 is arranged at the front of the end 59 in the first configuration of the cockpit 25 while the end 59 is arranged above the end 58 in the second configuration of the cockpit 25.

The arm 57 is delimited, in turn by:
- a flat face 75 defining, at the back, the armrest 52 in the first configuration of the cockpit 25; and
- a face 76 opposite the face 75, shaped and defining the backrest 42 in the second configuration of the cockpit 25.

The support structure 56 comprises a rear seat cushion 32 interposed between the seat cushions 30, 31 along the axis Y and a portion 77 arranged at the front of the seat cushion 32.

The seat cushion 32 faces the face 76 and is covered by the face 76 of the arm 57 in the first configuration of the cockpit 25.

The armrest 52 is thus defined at the front by the arm 57 and at the rear by the portion 77 of the support structure 56 in the first configuration of the cockpit 25.

In the second configuration of the cockpit 25, the seat cushion 32 remains uncovered and becomes part of the seat 28.

The face 76 also defines a headrest 78 for the seat 28 interposed between the end 68 and the backrest 42 in the second configuration of the cockpit 25.

The support structure 56 and the arm 57 are arranged parallel to the axis X in the first configuration of the cockpit 25 and the arm 57 is arranged transverse to the axis X in the second configuration of the cockpit 25.

In the example illustrated, the sides 108, 109 are each made of two corresponding, upper and lower half-sides 108a, 108b; 109a, 109b.

The transition of the cockpit 25 from the first to the second configuration and vice versa occurs thanks to:
- the rotation of the sides 98, 99 in relation to the corresponding seat cushions 30, 31 and around the respective axes A, B; and
- the rotation of the half-sides 108a, 108b; 109a, 109b in relation to the corresponding backrests 40, 41 and around the respective axes C, D; E, F.

The transition of the cockpit 25 from the first to the second configuration, and vice versa, also occurs manually or by driving an actuator (not illustrated).

More specifically, the sides 98, 99 are assembled so that they can rotate in relation to the corresponding seat cushions 30, 31 around the corresponding axes A, B between:
- respective third positions assumed when the cockpit 25 is in the first, "two-seater" configuration (Figure 2); and
- respective fourth positions assumed when the cockpit 25 is in the second, "single-seater" configuration (Figure 3) .

Similarly, the half-sides 108a, 108b, 109a, 109b are assembled so that they can rotate in relation to the corresponding backrests 40, 41 and around corresponding axes C, D, E, F between:
- respective fifth positions assumed when the cockpit 25 is in the first, "two-seater" configuration (Figure 2); and
- respective sixth positions assumed when the cockpit 25 is in the second, "single-seater" configuration (Figure 3) .

More precisely, in the respective third and fifth positions, the sides 97, 98; 99, 100; 107, 108; 109, 110 are arranged so that they diverge from each other, moving from the respective edges 160 towards the corresponding edges 161.

The sides 98, 99 also converge at the front of the seat cushion 32, moving from the respective edges 160 towards the corresponding edges 161.

Similarly, the sides 108, 109 also converge at the front of the backrest 42, moving from the respective edges 160 towards the corresponding edges 161.

In the corresponding fourth and sixth positions, the sides 97, 98; 99, 100 are arranged parallel to each other.

The sides 98, 99 also diverge at the front of the seat cushion 32, moving from the respective edges 160 towards the corresponding edges 161.

Similarly, the sides 107, 108 (109, 110) are arranged parallel to each other.

The sides 108, 109 also diverge at the front of the backrest 42, moving from the corresponding edges 160 towards the corresponding edges 161.

The seat 26 is arranged next to the door sill 23 and the other seat 27 is arranged next to the other door sill 24, thus implementing a left-hand drive mode in the motor vehicle 1 in the first, "two-seater" configuration of the cockpit 25.

The seat 28 is arranged midway between the door sills 23, 24.

In a way not described in detail since not necessary for this invention, the pedals 12 and the steering wheel 11 can be moved along the axis Y to encourage the transformation of the motor vehicle 1 between the first and second configuration.

In particular, the pedals 12 and the steering wheel 11 may be moved parallel to the axis Y between:
- a seventh position (Figure 1) assumed when the cockpit 25 is in the first "two-seater" configuration and wherein they face the seat 26 defined by the cockpit 25; and
- an eighth position (not illustrated) assumed when the cockpit 25 is in the second "single-seater" configuration and wherein they face the seat 28 defined by the cockpit 25.

The pedals 12 and the steering wheel 11 are arranged adjacent to the door sill 23 when they are arranged in the seventh position. In this seventh position, a first distance between the pedals 12 and the steering wheel 11, and the door sill 23 is less than a second distance between the pedals 12 and the steering wheel 11, and the door sill 24. The above-mentioned first and second distance are measured along the axis Y.

The pedals 12 and the steering wheel 11 are arranged in a position midway between the door sills 23, 24 when they are arranged in the eighth position. In this eighth position, the pedals 12 and the steering wheel 11 are equally spaced apart from the door sills 23, 24 along the axis Y.

During operation of the cockpit 25 and the motor vehicle, the passenger compartment 3 is in the first, "two-seater" configuration.

In this first, "two-seater" configuration, the cockpit 25 defines the seats 27, 26 for the driver and passenger respectively.

The seat 26 is delimited by the sides 97, 107 and by the sides 98, 108.

The seat 27 is delimited by the sides 99, 100 and by the sides 109, 110.

The sides 98, 99 are arranged in the respective third positions and the half-sides 108a, 108b, 109a, 109b are arranged in the respective fifth positions.

Therefore, the sides 97, 98; 99; 100; 107, 108; 109, 110 are arranged so that they diverge from each other, moving from the respective edges 160 to the corresponding edges 161 so as to enable easy access for the driver and passenger to the respective seats 27, 26.

The sides 98, 99; 108, 109 are arranged so that they converge with each other, moving from the respective edges 160 to the corresponding edges 161.

The arm 57 of the central tunnel 55 is arranged in the first position wherein it defines the armrest 52 interposed between the sides 98, 99. In this first position, the arm 57 is folded and overlapped on the support structure 56 and the ends 58, 59 overlap each other. The arm 57 and the support structure 56 also extend parallel to the axis X.

The pedals 12 and the steering wheel 11 are arranged in the seventh position, wherein they face the seat 27 along the axis X, to enable the driver to guide them.

If one wishes to reconfigure the motor vehicle 1, so as to arrange the cockpit 25 in the second, "single-seater" configuration, it is enough to drive the actuator so as to cause:
- the rotation of the arm 57 of the tunnel 55 in relation to the support structure 56 and around the axis H from the first position to the second;
- the rotation of the sides 98, 99 in relation to the corresponding seat cushions 30, 31 and around the corresponding axes A, B starting from the respective third positions until reaching the corresponding fourth positions; and
- the rotation of the half-sides 108a, 108b; 109a, 109b in relation to the corresponding backrests 40, 41 and around the corresponding axes C, D; E, F starting from the respective fifth positions until reaching the corresponding sixth positions.

With reference to Figure 3, the cockpit 25 in the second, "single-seater" configuration defines just one seat 28 for the driver.

More specifically, the seat 28 comprises the backrest 42 defined by the face 76 of the arm 57 and the seat cushion 32 defined by the face 77 of the support structure 56.

The arm 57 extends transversely to the axis X and the end 59 is arranged above the end 58 of the support structure 56.

The sides 98, 99 are arranged in the respective fourth positions and the sides 108a, 108b, 109a, 109b are arranged in the respective sixth positions.

Therefore, the sides 97, 98; 107, 108; 99, 100; 109, 110 are arranged parallel to each other and extend from respective opposite sides of the seat 28, moving from the respective edges 160 to the corresponding edges 161.

The sides 98, 99; 108, 109 diverge in front of the seat 28, moving from the respective edges 160 to the corresponding edges 161 so as to enable easy access for the driver and passenger to the seat 28.

The pedals 12 and the steering wheel 13 are also moved parallel to the axis Y, in a known way not illustrated, from the seventh position to the eighth position, wherein they face the seat 27 along the axis X to enable the driver to guide them.

Irrespective of the fact that the cockpit 25 is in the first, "two-seater" configuration, or in the second, "single-seater" configuration, the control members 10 control the engine 9, the wheels 6, 7, and the brake system 21 implementing a technology known in the sector as "drive by wire".

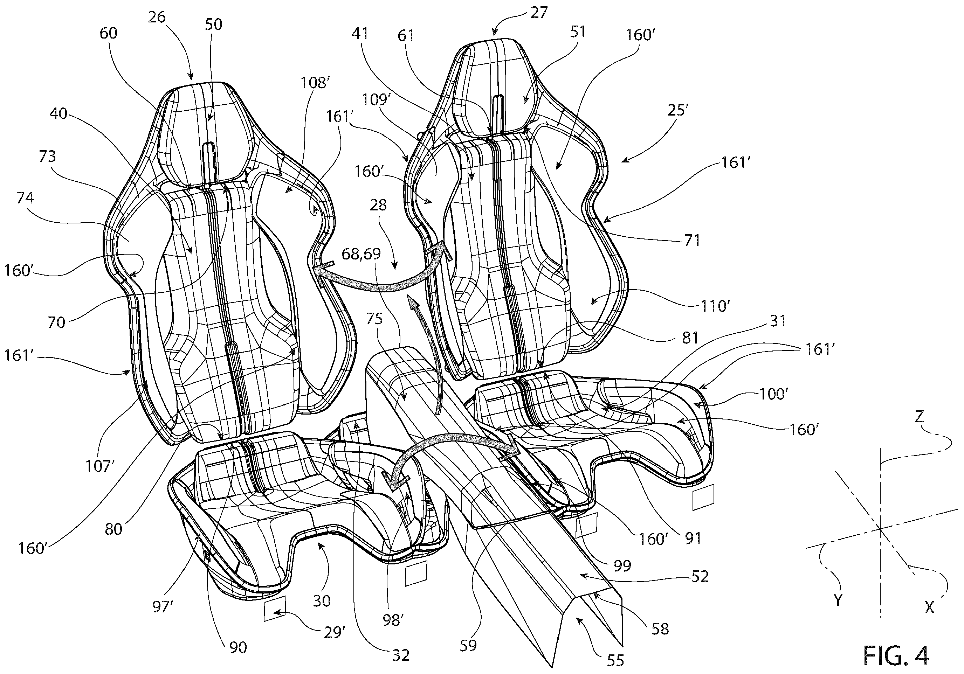

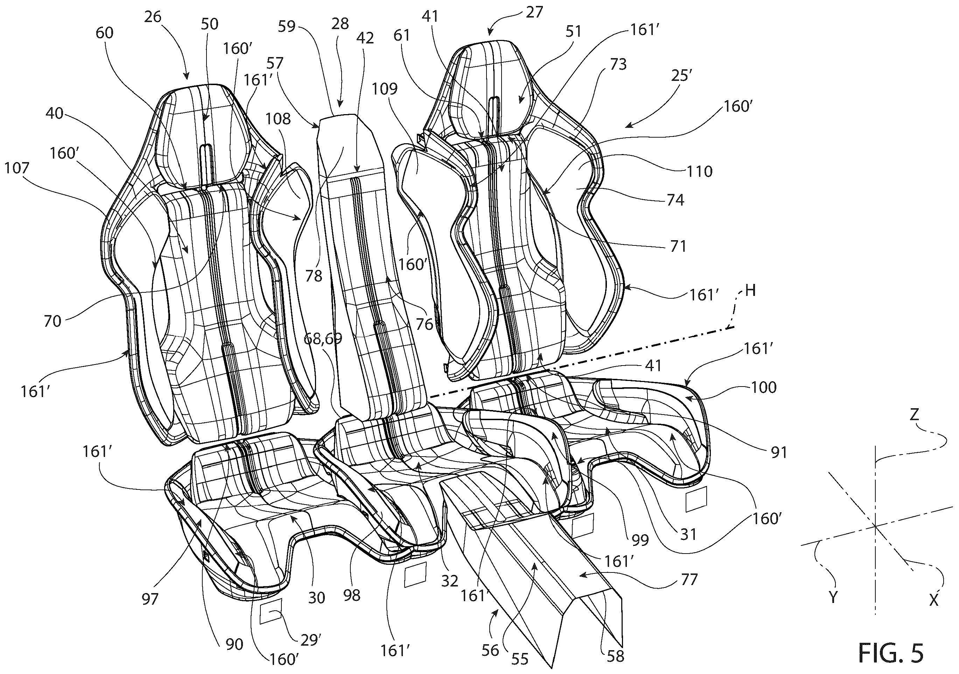

With reference to Figures 4 and 5, reference number 25' indicates a cockpit according to a second embodiment of this invention.

The cockpit 25' is similar to the cockpit 25 and will be described below only as far as it differs from the latter; the same or equivalent parts of the cockpit 25, 25' will be distinguished, where possible, by the same reference numbers.

The cockpit 25' differs from the first cockpit 25, in that:
- the sides 98', 99', 108', 109' are connected to the frame 29' so that they can be released;
- the sides 98', 99', 108', 109' cannot rotate in relation to the frame 29', once they have been connected to the frame 29'; and
- the sides 108', 109' are each made of a single element.

More specifically, in the first, "two-seater" configuration of the cockpit 25' (Figure 4), the sides 98', 108' are arranged on a first side of the central tunnel 55 and the sides 99', 109' are arranged on a second side, opposite the first side along the axis Y, of the central tunnel 55.

The sides 98', 99' and 108', 109' also diverge, moving from the corresponding edges 160' towards the corresponding edges 161'.

In the example illustrated, the first side is arranged on the side of the door sill 23 and the second side of the seat cushion 32 is arranged on the side of the door sill 24.

In the second, "single-seater" configuration of the cockpit 25' (Figure 5), the sides 98', 108' are arranged on the second side of the seat cushion 32 and the sides 99', 109' are arranged on the first side.

The sides 99', 98' and 109', 108' also diverge, moving from the corresponding edges 160' towards the corresponding edges 161'.

The operation of the cockpit 25' is similar to that of the first cockpit 25 and is only described as far as it differs from this.

The operation of the cockpit 25' differs from the first cockpit 25 in that the transition from the first, "two-seater" configuration to the second, "single-seater" configuration occurs by removing the sides 98', 99', and 108', 109' from the cockpit 25' and connecting them again, in the reverse position, to the cockpit 25'.

More specifically, in the first, "two-seater" configuration, the side 98' is placed between the seat cushion 30 and the central tunnel 55 with the arm 57 arranged in the first position, and the side 99' is interposed between the central tunnel 55.

If one wishes to reconfigure the motor vehicle 1, so as to arrange the cockpit 25' in the second, "single-seater" configuration, it is enough:
- to remove the sides 98', 99' from the frame 29';
- to remove the sides 108', 109' from the frame 29';
- to arrange the arm 57 in the second position interposed between the sides 108', 109'; and
- to arrange the side 99' placed between the seat cushion 30 and the support structure 56, the side 98' placed between the support structure 56 and the seat cushion 31, the side 109' placed between the backrest 40 and the arm 57, and the side 108' placed between the arm 57 and the backrest 41 along the axis Y.

Upon reaching the second, "single-seater" configuration, the sides 98', 99' and 108', 109' also diverge, moving from the respective edges 160' towards the corresponding edges 161'.

The advantages enabled by this invention will be apparent from an examination thereof.

More specifically, the cockpit 25, 25' can be moved between the first, "two-seater" configuration wherein it defines the seat 27 for the driver and the seat 26 for the passenger, and the second, "single-seater" configuration wherein it defines just the seat 28 for the driver, simply by acting on the sides 98, 99; 108, 109; 98', 99'; 108', 109' and the central tunnel 55.

In this way, the motor vehicle 1 can be quickly and simply made more suitable for road use when the cockpit 25, 25' assumes the first, "two-seater" configuration or sports use wherein the cockpit 25, 25' assumes the second, "single-seater" configuration.

The cockpit 25, 25' can be moved between the above-mentioned first, "two-seater" configuration and a second, "single-seater" configuration, by rotating the sides 98, 99; 108, 109 around the respective edges 160 and acting on the central tunnel 55.

The cockpit 25' can be moved between the above-mentioned first, "two-seater" configuration and a second, "single-seater" configuration, simply by exchanging the sides 98', 99'; 108', 109' and acting on the central tunnel 55.

The central tunnel 55 defines both the armrest 52 shared by the seats 26, 27 in the first, "two-seater" configuration and the seat cushion 32 and the backrest 42 of the seat 28 in the second, "two-seater" configuration, thus limiting the number of components needed for the transition of the cockpit 25, 25' between the above-mentioned first, "two-seater" configuration and second, "single-seater" configuration.

Finally, it is clear that changes may be made to the cockpit 25', 25' and to the reconfiguration method implemented according to this invention, and variations produced thereto that, in any case, do not depart from the scope of protection defined by the claims.

In particular, in the first, "two-seater" configuration, the seat 27 for the driver could be arranged facing the door sill 24 and the seat 26 for the passenger could be arranged facing the other door sill 23, thus implementing a right-hand drive mode in the motor vehicle 1.

## Claims

1. A cockpit (25, 25') for a motor vehicle (1), comprising:
- a frame (29, 29'), which can be fixed to said motor vehicle (1);
- a first and a second seat cushion (30, 31);
- a first and a second backrest (40, 41);
- a central tunnel (55);
said cockpit (25, 25') being available in a first configuration, wherein:
said first seat cushion (30)and said first backrest (40) define a first seat (27) for a driver; and
said second seat cushion (31) and said second backrest (41) define a second seat (26) for a passenger;
said central tunnel (55) being interposed between said first and second seats (26, 27) along a first axis (Y);
**characterized in that** said cockpit (25, 25') can be shifted to a second configuration, wherein it defines one single third seat (28) for a driver; said third seat (28) comprising, in turn, a third cushion (32) and a third backrest (42);
said cockpit (25, 25') being further **characterized in that** said central tunnel (55) comprises, in turn:
- a support structure (56), which is fixed relative to said first and second seat cushions (30, 31); and
- an arm (57), which is movable relative to said support structure (56) between:
a first position assumed when said cockpit (25, 25') is in said first configuration, wherein it is folded on said support structure (56) and defines an armrest (52) shared by said first and second seats (26, 27); and
a second position assumed when said cockpit (25, 25') is in said second configuration, wherein it is spaced apart from said support structure (56) and defines said third backrest (32) of said third seat (28);
said support structure (56) defining said third seat cushion (42) of said third seat (28), when said cockpit (25, 25') is in said second configuration.

2. The cockpit according to claim 1, **characterized in that** said arm (57) can rotate relative to said support structure (56) around a first axis (Y) between said first position and said second position.

3. The cockpit according to claim 2, **characterized in that**:
- said arm (57) comprises a first end and a second end (58, 68) opposite one another along a second axis (X), which is transverse to said first axis (Y);
- said support structure (56) comprises a third end and a fourth end (59, 69) opposite one another along said second axis (X); and
- said second and fourth ends (59, 69) being hinged to one another around said first axis (Y).

4. The cockpit according to any one of the preceding claims, **characterized in that** said arm (57) comprises, in turn:
- a first face (75) at least partly defining said armrest (52) in said first position; and
- a second face (76) opposite said first face (75) and defining said third backrest (42) in said second position of the arm (57);
said support structure (56) comprising, in turn:
- said third seat cushion (32), which faces said second face (76) and on which said second face (76) is folded when said arm (57) is in said first position, so as to define a further portion of said armrest (52), and is spaced apart from said second face (76) when said arm (57) is in said second position, so as to define part of said third seat (28).

5. The cockpit according to any one of the preceding claims, **characterized in that** it further comprises a first side (98, 108; 99'; 108') and a second side (99, 109; 99', 109');
said first side (98, 108; 99'; 108') delimiting said first seat (26) on the side of said second seat (27) in said first configuration;
said second side (98, 108; 99'; 108') delimiting said second seat (27) on the side of said first seat (26) in said first configuration;
said first side (98, 108; 99', 108') and said second side (99, 109; 99', 109') each comprising a respective first edge (160, 160'), which is constrained to said cockpit (25, 25'), and a respective second edge (161, 161'), which is opposite the respective first edge (160, 160') and is free;
said first side (98, 108; 99', 108') and said second side (99, 109; 99', 109') converging towards one another in said first configuration of said cockpit (25, 25'), moving from the respective first edges (160, 160') to the corresponding second edges (161, 161');
said first side (98, 108; 99', 108') and said second side (99, 109; 99', 109') being interposed, along said first axis (Y), between said first seat (30) and said third seat (32) and between said third seat (32) and said second seat (31), respectively, in said second configuration of said cockpit (25, 25');
said first side (98, 108; 99', 108') and said second side (99, 109; 99', 109') diverging from one another in said second configuration of said cockpit (25, 25'), moving from the respective first edges (160, 160') to the corresponding second edges (161, 161').

6. The cockpit according to any one of the preceding claims, **characterized in that** said first and second sides (98, 108; 99, 109) can rotate relative to the respective first and second seat cushions (30, 31) or said first and second backrests (40, 41) can rotate between a third and a fourth position assumed when said cockpit (25) is in said first and second configuration, respectively.

7. The cockpit according to claim 6, **characterized in that** said first and second sides (108, 109) can rotate relative to said frame (29);
each one of said first and second sides (108, 109) comprising, in turn:
- a respective first half-side (108a, 109a), which can rotate around a third axis (C, D); and
- a respective second half-side (108b, 109b), which can rotate around a respective fourth axis (E, F).

8. The cockpit according to claim 5, **characterized in that** said first side (98'; 108') and said second side (99'; 109') are connected to said frame (29') in a releasable manner;
said first side (99'; 108') delimiting said second seat (26) on the side of said first seat (27) in said second configuration;
said second side (99'; 108') delimiting said first seat (27) on the side of said second seat (26) in said second configuration.

9. The cockpit according to any one of the claims from 5 to 8, **characterized in that** it comprises a third side (97, 107; 97', 107') and a fourth side (100, 110; 100', 110') fixed to the cockpit (25, 25') itself;
said first side (98, 108; 98', 108') and said third side (97, 107; 97', 107') laterally delimiting, on opposite sides, the corresponding first seat cushion (30, 31) or said first backrest (40, 41) and diverging from one another moving from the respective first edges (160, 160') to the corresponding second edges (161, 161') in said first configuration of said cockpit (25, 25');
said second side (99, 109; 99', 109') and said fourth side (100, 110; 100', 110') laterally delimiting, on opposite sides, the corresponding second seat cushion (30, 31) or said second backrest (40, 41) and diverging from one another moving from the respective first edges (160, 160') to the corresponding second edges (161, 161') in said first configuration of said cockpit (25, 25').

10. A motor vehicle (1) comprising:
- a passenger compartment (3);
- a plurality of driving members (10; 11, 12), which are housed inside said passenger compartment (3) and can be operated by a driver in order to control the trajectory and the speed of said motor vehicle (1);
- at least one control member (6, 7, 9, 21) connected to at least one driving member (10; 11, 12) through a drive by wire mode; and
- a cockpit according to any one of the claims 1-9.

11. A method for the configuration of a cockpit (25, 25') for a motor vehicle (1);
said cockpit (25) comprising:
- a first and a second seat cushion (30, 31);
- a first and a second backrest (40, 41); and
- a central tunnel (55);
said method comprising the step i) of arranging said cockpit (25, 25') to a first configuration, wherein:
said first seat cushion (30)and said first backrest (40) define a first seat (27) for a driver; and
said second seat cushion (31) and said second backrest (41) define a second seat (26) for a passenger;
said central tunnel (55) being interposed between said first and second seats (26, 27) along a first axis (Y);
**characterized in that** it comprises the steps of:
ii) shifting said cockpit (25, 25') to a second configuration, wherein it defines one single third seat (28) for a driver; said third seat (28) comprising, in turn, a third cushion (32) and a third backrest (42);
iii) moving said central tunnel (55) between:
a first position assumed when said cockpit (25, 25') is in said first configuration and wherein said arm (57) is folded on said support structure (57) and at least partly defines an armrest (52) shared by said first and second seats (26, 27); and
a second position assumed when said cockpit (25, 25') is in said second configuration and wherein said arm (57) is spaced apart from said support structure (56) and defines said third backrest (32) of said third seat (28); said support structure (56) defining said third seat cushion (42) of said third seat (28), when said cockpit (25, 25') is in said second configuration and said arm (57) is in said second position.

12. The method according to claim 11, **characterized in that** said step iii) comprises the step iv) of rotating said arm (57) relative to said support structure (56) around a first axis (Y) between said first position and said second position.

13. The method according to claim 11 or 12, **characterized in that** it comprises the steps of:
v) arranging said cockpit (25, 25') to a first configuration, wherein:
- a first side (98, 108; 99'; 108') of said cockpit (25, 25') delimits said first seat (26) on the side of said second seat (27) in said first configuration;
- a second side (98, 108; 99'; 108') of said cockpit (25, 25') delimits said second seat (27) on the side of said first seat (26) in said first configuration; and
- said first side (98, 108; 99'; 108') and said second side (99, 109; 99', 109') converge towards one another, moving from the respective first edges (160, 160') to the corresponding second edges (161, 161');
vi) shifting said cockpit (25, 25') to a second configuration, wherein said first side (98, 108; 99'; 108') and said second side (99, 109; 99', 109') diverge from one another, moving from the respective first edges (160, 160') to the corresponding second edges (161, 161');
said first side (98, 108; 99', 108') and said second side (99, 109; 99', 109') being interposed, along said first axis (Y), between said first seat (26) and said third seat (28) and between said third seat (28) and said second seat (26) in said second configuration of said cockpit (25, 25').

14. The method according to claim 13, **characterized in that** it comprises the step vii) of rotating a first and a second side (98, 108; 99, 109) relative to the respective first and second seat cushions (30, 31) or said first and second backrests (40, 41) between a third position and a fourth position assumed when said cockpit (25) is in said first and second configuration, respectively.

15. The method according to claim 14, **characterized in that** said step vii) comprises the steps of:
viii) rotating first half-sides (108a, 109a) of the respective first side and second side (108, 109) around respective second axes (C, D); and
ix) rotating second half-sides (108b, 109b) of the respective first side and second side (108, 109) around respective third axes (E, F).

16. The method according to claim 13 or 14, **characterized in that** it comprises the steps of:
x) connecting said first side (98', 108') and said second side (99', 109') to said frame (29) in a releasable manner;
xi) placing said first side (98', 108') on a first side of said third seat (32) and said second side (99'; 109') on a second side of said third seat (32) opposite said first side, when said cockpit (25') is in said first configuration; and
xii) switching said first side (98', 108') and said second side (99', 109') in order to shift said cockpit (25') from said first configuration to said second configuration.

## Patentansprüche

1. Cockpit (25, 25') für ein Kraftfahrzeug (1), umfassend:
- einen Rahmen (29, 29'), der an dem Kraftfahrzeug (1) befestigt werden kann;
- ein erstes und ein zweites Sitzpolster (30, 31);
- eine erste und eine zweite Rückenlehne (40, 41);
- einen zentralen Tunnel (55);
wobei das Cockpit (25, 25') in einer ersten Konfiguration verfügbar ist, wobei:
das erste Sitzpolster (30) und die erste Rückenlehne (40) einen ersten Sitz (27) für einen Fahrer definieren; und
das zweite Sitzpolster (31) und die zweite Rückenlehne (41) einen zweiten Sitz (26) für einen Fahrgast definieren;
wobei der zentrale Tunnel (55) zwischen dem ersten und dem zweiten Sitz (26, 27) entlang einer ersten Achse (Y) eingefügt ist;
**dadurch gekennzeichnet, dass** das Cockpit (25, 25') in eine zweite Konfiguration verschoben werden kann, in der es einen einzigen dritten Sitz (28) für einen Fahrer definiert, wobei der dritte Sitz (28) wiederum ein drittes Polster (32) und eine dritte Rückenlehne (42) umfasst;
wobei das Cockpit (25, 25') ferner **dadurch gekennzeichnet ist, dass** der zentrale Tunnel (55) wiederum Folgendes umfasst:
- eine Stützstruktur (56), die relativ zu dem ersten und zweiten Sitzpolster (30, 31) feststehend ist; und
- einen Arm (57), der relativ zu der Stützstruktur (56) beweglich ist zwischen:
einer ersten Position, die eingenommen wird, wenn sich das Cockpit (25, 25') in der ersten Konfiguration befindet, in der es auf der Stützstruktur (56) geklappt ist und eine Armlehne (52) definiert, die von dem ersten und dem zweiten Sitz (26, 27) gemeinsam genutzt wird; und
einer zweiten Position, die eingenommen wird, wenn sich das Cockpit (25, 25') in der zweiten Konfiguration befindet, in der es von der Stützstruktur (56) beabstandet ist und die dritte Rückenlehne (32) des dritten Sitzes (28) definiert;
wobei die Stützstruktur (56) das dritte Sitzpolster (42) des dritten Sitzes (28) definiert, wenn sich das Cockpit (25, 25') in der zweiten Konfiguration befindet.

2. Cockpit nach Anspruch 1, **dadurch gekennzeichnet, dass** sich der Arm (57) relativ zu der Stützstruktur (56) um eine erste Achse (Y) zwischen der ersten Position und der zweiten Position drehen kann.

3. Cockpit nach Anspruch 2, **dadurch gekennzeichnet, dass**:
- der Arm (57) ein erstes Ende und ein zweites Ende (58, 68) umfasst, die einander entlang einer zweiten Achse (X) gegenüberliegen, die quer zur ersten Achse (Y) verläuft;
- die Stützstruktur (56) ein drittes Ende und ein viertes Ende (59, 69) umfasst, die einander entlang der zweiten Achse (X) gegenüberliegen; und
- wobei das zweite und vierte Ende (59, 69) um die erste Achse (Y) gelenkig miteinander verbunden sind.

4. Cockpit nach einem der vorhergehenden Ansprüche, **dadurch gekennzeichnet, dass** der Arm (57) wiederum Folgendes umfasst:
- eine erste Fläche (75), die die Armlehne (52) in der ersten Position zumindest teilweise definiert; und
- eine zweite Fläche (76), die der ersten Fläche (75) gegenüberliegt und die dritte Rückenlehne (42) in der zweiten Position des Arms (57) definiert;
wobei die Stützstruktur (56) wiederum umfasst:
- das dritte Sitzpolster (32), das der zweiten Fläche (76) zugewandt ist und auf dem die zweite Fläche (76) geklappt ist, wenn sich der Arm (57) in der ersten Position befindet, um einen weiteren Abschnitt der Armlehne (52) zu definieren, und von der zweiten Fläche (76) beabstandet ist, wenn sich der Arm (57) in der zweiten Position befindet, um einen Teil des dritten Sitzes (28) zu definieren.

5. Cockpit nach einem der vorhergehenden Ansprüche, **dadurch gekennzeichnet, dass** es ferner eine erste Seite (98, 108; 99'; 108') und eine zweite Seite (99, 109; 99', 109') umfasst;
wobei die erste Seite (98, 108; 99'; 108') den ersten Sitz (26) auf der Seite des zweiten Sitzes (27) in der ersten Konfiguration begrenzt;
wobei die zweite Seite (98, 108; 99'; 108') den zweiten Sitz (27) auf der Seite des ersten Sitzes (26) in der ersten Konfiguration begrenzt;
wobei die erste Seite (98, 108; 99', 108') und die zweite Seite (99, 109; 99', 109') jeweils eine jeweilige erste Kante (160, 160'), die auf dem Cockpit (25, 25') gebunden ist, und eine jeweilige zweite Kante (161, 161') umfassen, die der jeweiligen ersten Kante (160, 160') gegenüberliegt und frei ist;
wobei die erste Seite (98, 108; 99', 108') und die zweite Seite (99, 109; 99', 109') in der ersten Konfiguration des Cockpits (25, 25') zueinander konvergieren, indem sie sich von den jeweiligen ersten Kanten (160, 160') zu den entsprechenden zweiten Kanten (161, 161') bewegen;
wobei die erste Seite (98, 108; 99', 108') und die zweite Seite (99, 109; 99', 109') entlang der ersten Achse (Y) jeweils zwischen dem ersten Sitz (30) und dem dritten Sitz (32) und zwischen dem dritten Sitz (32) und dem zweiten Sitz (31) in der zweiten Konfiguration des Cockpits (25, 25') eingefügt sind;
wobei die erste Seite (98, 108; 99', 108') und die zweite Seite (99, 109; 99', 109') in der zweiten Konfiguration des Cockpits (25, 25') voneinander divergieren, indem sie sich von den jeweiligen ersten Kanten (160, 160') zu den entsprechenden zweiten Kanten (161, 161') bewegen.

6. Cockpit nach einem der vorhergehenden Ansprüche, **dadurch gekennzeichnet, dass** sich die erste und zweite Seite (98, 108; 99, 109) relativ zu dem jeweiligen ersten und zweiten Sitzpolster (30, 31) drehen können oder sich die erste und zweite Rückenlehne (40, 41) zwischen einer dritten und einer vierten Position drehen können, die eingenommen werden, wenn sich das Cockpit (25) in der ersten bzw. zweiten Konfiguration befindet.

7. Cockpit nach Anspruch 6, **dadurch gekennzeichnet, dass** sich die erste und zweite Seite (108, 109) relativ zu dem Rahmen (29) drehen können;
wobei jede der ersten und zweiten Seite (108, 109) wiederum Folgendes umfasst:
- eine jeweilige erste Halbseite (108a, 109a), die sich um eine dritte Achse (C, D) drehen kann; und
- eine jeweilige zweite Halbseite (108b, 109b), die sich um eine jeweilige vierte Achse (E, F) drehen kann.

8. Cockpit nach Anspruch 5, **dadurch gekennzeichnet, dass** die erste Seite (98'; 108') und die zweite Seite (99'; 109') mit dem Rahmen (29') in einer lösbaren Weise verbunden sind;
wobei die erste Seite (99'; 108') den zweiten Sitz (26) auf der Seite des ersten Sitzes (27) in der zweiten Konfiguration begrenzt;
wobei die zweite Seite (99'; 108') den ersten Sitz (27) auf der Seite des zweiten Sitzes (26) in der zweiten Konfiguration begrenzt.

9. Cockpit nach einem der Ansprüche 5 bis 8, **dadurch gekennzeichnet, dass** es eine dritte Seite (97, 107; 97', 107') und eine vierte Seite (100, 110; 100', 110') umfasst, die am Cockpit (25, 25') selbst befestigt sind;
wobei die erste Seite (98, 108; 98', 108') und die dritte Seite (97, 107; 97', 107') auf gegenüberliegenden Seiten das entsprechende erste Sitzpolster (30, 31) oder die erste Rückenlehne (40, 41) seitlich begrenzen und voneinander divergieren, indem sie sich von den jeweiligen ersten Kanten (160, 160') zu den entsprechenden zweiten Kanten (161, 161') in der ersten Konfiguration des Cockpits (25, 25') bewegen;
wobei die zweite Seite (99, 109; 99', 109') und die vierte Seite (100, 110; 100', 110') auf gegenüberliegenden Seiten das entsprechende zweite Sitzpolster (30, 31) oder die zweite Rückenlehne (40, 41) seitlich begrenzen und voneinander divergieren, indem sie sich von den jeweiligen ersten Kanten (160, 160') zu den entsprechenden zweiten Kanten (161, 161') in der ersten Konfiguration des Cockpits (25, 25') bewegen.

10. Kraftfahrzeug (1), umfassend:
- einen Fahrgastraum (3);
- eine Vielzahl von Antriebselementen (10; 11, 12), die im Inneren des Fahrgastraums (3) untergebracht sind und von einem Fahrer bedient werden können, um die Flugbahn und die Geschwindigkeit des Kraftfahrzeugs (1) zu steuern;
- mindestens ein Steuerelement (6, 7, 9, 21), das durch einen Drive-by-Wire-Modus mit mindestens einem Antriebselement (10; 11, 12) verbunden ist; und
- ein Cockpit nach einem der Ansprüche 1-9.

11. Verfahren zur Konfiguration eines Cockpits (25, 25') für ein Kraftfahrzeug (1); wobei das Cockpit (25) umfasst:
- ein erstes und ein zweites Sitzpolster (30, 31);
- eine erste und eine zweite Rückenlehne (40, 41); und
- einen zentralen Tunnel (55);
wobei das Verfahren den Schritt i) des Anordnens des Cockpits (25, 25') in eine erste Konfiguration umfasst, wobei:
das erste Sitzpolster (30) und die erste Rückenlehne (40) einen ersten Sitz (27) für einen Fahrer definieren; und
das zweite Sitzpolster (31) und die zweite Rückenlehne (41) einen zweiten Sitz (26) für einen Fahrgast definieren;
wobei der zentrale Tunnel (55) zwischen dem ersten und dem zweiten Sitz (26, 27) entlang einer ersten Achse (Y) eingefügt ist;
**dadurch gekennzeichnet, dass** es folgende Schritte umfasst:
ii) Verschieben des Cockpits (25, 25') in eine zweite Konfiguration, in der es einen einzigen dritten Sitz (28) für einen Fahrer definiert, wobei der dritte Sitz (28) wiederum ein drittes Polster (32) und eine dritte Rückenlehne (42) umfasst;
iii) Bewegen des zentralen Tunnels (55) zwischen:
einer ersten Position, die eingenommen wird, wenn sich das Cockpit (25, 25') in der ersten Konfiguration befindet, und in der der Arm (57) auf der Stützstruktur (57) geklappt ist und eine Armlehne (52) zumindest teilweise definiert, die von dem ersten und dem zweiten Sitz (26, 27) gemeinsam genutzt wird; und
einer zweiten Position, die eingenommen wird, wenn sich das Cockpit (25, 25') in der zweiten Konfiguration befindet, und wobei der Arm (57) von der Stützstruktur (56) beabstandet ist und die dritte Rückenlehne (32) des dritten Sitzes (28) definiert; wobei die Stützstruktur (56) das dritte Sitzpolster (42) des dritten Sitzes (28) definiert, wenn sich das Cockpit (25, 25') in der zweiten Konfiguration befindet und sich der Arm (57) in der zweiten Position befindet.

12. Verfahren nach Anspruch 11, **dadurch gekennzeichnet, dass** der Schritt iii) den Schritt iv) des Drehens des Arms (57) relativ zu der Stützstruktur (56) um eine erste Achse (Y) zwischen der ersten Position und der zweiten Position umfasst.

13. Verfahren nach Anspruch 11 oder 12, **dadurch gekennzeichnet, dass** es die folgenden Schritte umfasst:
v) Anordnen des Cockpits (25, 25') in eine erste Konfiguration, wobei:
- eine erste Seite (98, 108; 99'; 108') des Cockpits (25, 25') den ersten Sitz (26) auf der Seite des zweiten Sitzes (27) in der ersten Konfiguration begrenzt;
- eine zweite Seite (98, 108; 99'; 108') des Cockpits (25, 25') den zweiten Sitz (27) auf der Seite des ersten Sitzes (26) in der ersten Konfiguration begrenzt; und
- die erste Seite (98, 108; 99'; 108') und die zweite Seite (99, 109; 99', 109') zueinander konvergieren, indem sie sich von den jeweiligen ersten Kanten (160, 160') zu den entsprechenden zweiten Kanten (161, 161') bewegen;
vi) Verschieben des Cockpits (25, 25') in eine zweite Konfiguration, in der die erste Seite (98, 108; 99'; 108') und die zweite Seite (99, 109; 99', 109') voneinander divergieren, indem sie sich von den jeweiligen ersten Kanten (160, 160') zu den entsprechenden zweiten Kanten (161, 161') bewegen;
wobei die erste Seite (98, 108; 99', 108') und die zweite Seite (99, 109; 99', 109') entlang der ersten Achse (Y) zwischen dem ersten Sitz (26) und dem dritten Sitz (28) und zwischen dem dritten Sitz (28) und dem zweiten Sitz (26) in der zweiten Konfiguration des Cockpits (25, 25') eingefügt sind.

14. Verfahren nach Anspruch 13, **dadurch gekennzeichnet, dass** es den Schritt vii) des Drehens einer ersten und einer zweiten Seite (98, 108; 99, 109) relativ zu dem jeweiligen ersten und zweiten Sitzpolster (30, 31) oder der ersten und zweiten Rückenlehne (40, 41) zwischen einer dritten Position und einer vierten Position, die eingenommen werden, wenn sich das Cockpit (25) in der ersten bzw. zweiten Konfiguration befindet, umfasst.

15. Verfahren nach Anspruch 14, **dadurch gekennzeichnet, dass** der Schritt vii) die folgenden Schritte umfasst:
viii) Drehen erster Halbseiten (108a, 109a) der jeweiligen ersten Seite und zweiten Seite (108, 109) um jeweilige zweite Achsen (C, D); und
ix) Drehen der zweiten Halbseiten (108b, 109b) der jeweiligen ersten Seite und zweiten Seite (108, 109) um jeweilige dritte Achsen (E, F).

16. Verfahren nach Anspruch 13 oder 14, **dadurch gekennzeichnet, dass** es die folgenden Schritte umfasst:
x) Verbinden der ersten Seite (98', 108') und der zweiten Seite (99', 109') mit dem Rahmen (29) in einer lösbaren Weise;
xi) Anordnen der ersten Seite (98', 108') auf einer ersten Seite des dritten Sitzes (32) und der zweiten Seite (99'; 109') auf einer zweiten Seite des dritten Sitzes (32) gegenüber der ersten Seite, wenn sich das Cockpit (25') in der ersten Konfiguration befindet; und
xii) Umschalten der ersten Seite (98', 108') und der zweiten Seite (99', 109'), um das Cockpit (25') von der ersten Konfiguration in die zweite Konfiguration zu verschieben.

## Revendications

1. Poste de conduite (25, 25') pour un véhicule automobile (1), comprenant :
- un châssis (29, 29') qui peut être fixé audit véhicule automobile (1) ;
- un premier et un deuxième coussin de siège (30, 31) ;
- un premier et un deuxième dossier (40, 41) ;
- un tunnel central (55) ;
ledit poste de conduite (25, 25') étant disponible dans une première configuration, dans lequel :
ledit premier coussin de siège (30) et ledit premier dossier (40) définissent un premier siège (27) pour un conducteur ; et
ledit deuxième coussin de siège (31) et ledit deuxième dossier (41) définissent un deuxième siège (26) pour un passager ;
ledit tunnel central (55) étant interposé entre lesdits premier et deuxième sièges (26, 27) le long d'un premier axe (Y) ;
**caractérisé en ce que** ledit poste de conduite (25, 25') peut être déplacé vers une seconde configuration, dans lequel il définit un troisième siège (28) individuel pour un conducteur ; ledit troisième siège (28) comprenant, à son tour, un troisième coussin (32) et un troisième dossier (42) ;
ledit poste de conduite (25, 25') étant en outre **caractérisé en ce que** ledit tunnel central (55) comprend, à son tour :
- une structure de support (56), qui est fixée par rapport auxdits premier et deuxième coussins de siège (30, 31) ; et
- un bras (57), étant mobile par rapport à ladite structure de support (56) entre :
une première position prise lorsque ledit poste de conduite (25, 25') se trouve dans ladite première configuration, dans lequel il est replié sur ladite structure de support (56) et définit un accoudoir (52) partagé par lesdits premier et deuxième sièges (26, 27) ; et
une deuxième position prise lorsque ledit poste de conduite (25, 25') se trouve dans ladite seconde configuration, dans lequel il est espacé de ladite structure de support (56) et définit ledit troisième dossier (32) dudit troisième siège (28) ;
ladite structure de support (56) définissant ledit troisième coussin de siège (42) dudit troisième siège (28), lorsque ledit poste de conduite (25, 25') se trouve dans ladite seconde configuration.

2. Poste de conduite selon la revendication 1, **caractérisé en ce que** ledit bras (57) peut pivoter par rapport à ladite structure de support (56) autour d'un premier axe (Y) entre ladite première position et ladite deuxième position.

3. Poste de conduite selon la revendication 2, **caractérisé en ce que** :
- ledit bras (57) comprend une première extrémité et une deuxième extrémité (58, 68) opposées l'une à l'autre le long d'un deuxième axe (X), qui est transversal audit premier axe (Y) ;
- ladite structure de support (56) comprend une troisième extrémité et une quatrième extrémité (59, 69) opposées l'une à l'autre le long dudit deuxième axe (X) ; et
- lesdites deuxième et quatrième extrémités (59, 69) étant articulées l'une à l'autre autour dudit premier axe (Y)

4. Poste de conduite selon l'une quelconque des revendications précédentes, **caractérisé en ce que** ledit bras (57) comprend, à son tour :
- une première face (75) définissant au moins partiellement ledit accoudoir (52) dans ladite première position ; et
- une deuxième face (76) opposée à ladite première face (75) et définissant ledit troisième dossier (42) dans ladite deuxième position du bras (57) ;
ladite structure de support (56) comprenant, à son tour :
- ledit troisième coussin de siège (32), qui fait face à ladite deuxième face (76) et sur lequel ladite deuxième face (76) est repliée lorsque ledit bras (57) se trouve dans ladite première position, de manière à définir une partie supplémentaire dudit accoudoir (52), et qui est espacé de ladite deuxième face (76) lorsque ledit bras (57) se trouve dans ladite deuxième position, de manière à définir une partie dudit troisième siège (28).

5. Poste de conduite selon l'une quelconque des revendications précédentes, **caractérisé en ce qu'**il comprend en outre un premier côté (98, 108 ; 99' ; 108') et un deuxième côté (99, 109 ; 99', 109') ;
ledit premier côté (98, 108 ; 99' ; 108') délimitant ledit premier siège (26) du côté dudit deuxième siège (27) dans ladite première configuration ;
ledit deuxième côté (98, 108 ; 99' ; 108') délimitant ledit deuxième siège (27) du côté dudit premier siège (26) dans ladite première configuration ;
ledit premier côté (98, 108 ; 99', 108') et ledit deuxième côté (99, 109 ; 99', 109') comprenant chacun un premier bord respectif (160, 160'), qui est contraint audit poste de conduite (25, 25'), et un deuxième bord respectif (161, 161'), qui est opposé au premier bord respectif (160, 160') et qui est libre ;
ledit premier côté (98, 108 ; 99', 108') et ledit deuxième côté (99, 109 ; 99', 109') convergeant l'un vers l'autre dans ladite première configuration dudit poste de conduite (25, 25'), en passant des premiers bords respectifs (160, 160') aux deuxièmes bords correspondants (161, 161') ;
ledit premier côté (98, 108 ; 99', 108') et ledit deuxième côté (99, 109 ; 99', 109') étant interposés, le long dudit premier axe (Y), entre ledit premier siège (30) et ledit troisième siège (32) et, respectivement, entre ledit troisième siège (32) et ledit deuxième siège (31), dans ladite seconde configuration dudit poste de conduite (25, 25') ;
ledit premier côté (98, 108 ; 99', 108') et ledit deuxième côté (99, 109 ; 99', 109') s'écartant l'un de l'autre dans ladite seconde configuration dudit poste de conduite (25, 25'), en passant des premiers bords respectifs (160, 160') aux deuxièmes bords correspondants (161, 161').

6. Poste de conduite selon l'une quelconque des revendications précédentes, **caractérisé en ce que** lesdits premier et deuxième côtés (98, 108 ; 99, 109) peuvent pivoter par rapport aux premier et deuxième coussins de siège respectifs (30, 31) ou lesdits premier et deuxième dossiers (40, 41) peuvent pivoter entre une troisième et une quatrième position prises lorsque ledit poste de conduite (25) se trouve, respectivement, dans lesdites première et seconde configurations.

7. Poste de conduite selon la revendication 6, **caractérisé en ce que** lesdits premier et deuxième côtés (108, 109) peuvent pivoter par rapport audit châssis (29) ;
chacun desdits premier et deuxième côtés (108, 109) comprenant, à son tour :
- un premier demi-côté respectif (108a, 109a), qui peut pivoter autour d'un troisième axe (C, D) ; et
- un second demi-côté respectif (108b, 109b), qui peut pivoter autour d'un quatrième axe respectif (E, F).

8. Poste de conduite selon la revendication 5, **caractérisé en ce que** ledit premier côté (98' ; 108') et ledit deuxième côté (99' ; 109') sont reliés audit châssis (29') de manière amovible ;
ledit premier côté (99' ; 108') délimitant ledit deuxième siège (26) du côté dudit premier siège (27) dans ladite seconde configuration ;
ledit deuxième côté (99' ; 108') délimitant ledit premier siège (27) du côté dudit deuxième siège (26) dans ladite seconde configuration.

9. Poste de conduite selon l'une quelconque des revendications de 5 à 8, **caractérisé en ce qu'**il comprend un troisième côté (97, 107 ; 97', 107') et un quatrième côté (100, 110 ; 100', 110') fixés à l'poste de conduite (25, 25') lui-même ;
ledit premier côté (98, 108 ; 98', 108') et ledit troisième côté (97, 107 ; 97', 107') délimitant latéralement, sur des côtés opposés, le premier coussin de siège correspondant (30, 31) ou ledit premier dossier (40, 41) et s'écartant l'un de l'autre en passant des premiers bords respectifs (160, 160') aux deuxièmes bords correspondants (161, 161') dans ladite première configuration dudit poste de conduite (25, 25') ;
ledit deuxième côté (99, 109 ; 99', 109') et ledit quatrième côté (100, 110 ; 100', 110') délimitant latéralement, sur des côtés opposés, le deuxième coussin de siège correspondant (30, 31) ou ledit deuxième dossier (40, 41) et s'écartant l'un de l'autre en passant des premiers bords respectifs (160, 160') aux deuxièmes bords correspondants (161, 161') dans ladite première configuration dudit poste de conduite (25, 25').

10. Véhicule automobile (1) comprenant :
- un habitacle (3) ;
- une pluralité d'éléments d'entraînement (10 ; 11, 12), étant logés à l'intérieur dudit habitacle (3) et pouvant être actionnés par un conducteur afin de contrôler la trajectoire et la vitesse dudit véhicule automobile (1) ;
- au moins un élément de commande (6, 7, 9, 21) relié à au moins un élément d'entraînement (10 ; 11, 12) par un mode d'entraînement par fil ; et
- un poste de conduite selon l'une des revendications 1-9.

11. Procédé de configuration d'un poste de conduite (25, 25') pour un véhicule automobile (1) ; ledit poste de conduite (25) comprenant :
- un premier et un deuxième coussin de siège (30, 31) ;
- un premier et un deuxième dossier (40, 41) ; et
- un tunnel central (55) ;
ledit procédé comprenant l'étape i) consistant à agencer ledit poste de conduite (25, 25') dans une première configuration, dans lequel :
ledit premier coussin de siège (30) et ledit premier dossier (40) définissent un premier siège (27) pour un conducteur ; et
ledit deuxième coussin de siège (31) et ledit deuxième dossier (41) définissent un deuxième siège (26) pour un passager ;
ledit tunnel central (55) étant interposé entre lesdits premier et deuxième sièges (26, 27) le long d'un premier axe (Y) ;
**caractérisé en ce qu'**il comprend les étapes consistant à :
ii) faire passer ledit poste de conduite (25, 25') à une seconde configuration, dans lequel il définit un troisième siège (28) individuel pour un conducteur ; ledit troisième siège (28) comprenant, à son tour, un troisième coussin (32) et un troisième dossier (42) ;
iii) déplacer ledit tunnel central (55) entre :
une première position prise lorsque ledit poste de conduite (25, 25') se trouve dans ladite première configuration et ledit bras (57) étant replié sur ladite structure de support (57) et définissant au moins en partie un accoudoir (52) partagé par lesdits premier et deuxième sièges (26, 27) ; et
une deuxième position prise lorsque ledit poste de conduite (25, 25') se trouve dans ladite seconde configuration et ledit bras (57) étant espacé de ladite structure de support (56) et définissant ledit troisième dossier (32) dudit troisième siège (28) ; ladite structure de support (56) définissant ledit troisième coussin de siège (42) dudit troisième siège (28), lorsque ledit poste de conduite (25, 25') se trouve dans ladite seconde configuration et que ledit bras (57) se trouve dans ladite deuxième position.

12. Procédé selon la revendication 11, **caractérisé en ce que** ladite étape iii) comprend l'étape iv) de rotation dudit bras (57) par rapport à ladite structure de support (56) autour d'un premier axe (Y) entre ladite première position et ladite deuxième position.

13. Procédé selon la revendication 11 ou 12, **caractérisé en ce qu'**il comprend les étapes consistant à :
v) agencer ledit poste de conduite (25, 25') dans une première configuration, dans lequel :
- un premier côté (98, 108 ; 99' ; 108') dudit poste de conduite (25, 25') délimite ledit premier siège (26) du côté dudit deuxième siège (27) dans ladite première configuration ;
- un deuxième côté (98, 108 ; 99' ; 108') dudit poste de conduite (25, 25') délimite ledit deuxième siège (27) du côté dudit premier siège (26) dans ladite première configuration ; et
- ledit premier côté (98, 108 ; 99' ; 108') et ledit deuxième côté (99, 109 ; 99', 109') convergent l'un vers l'autre, en passant des premiers bords respectifs (160, 160') vers les deuxièmes bords correspondants (161, 161') ;
vi) faire passer ledit poste de conduite (25, 25') à une seconde configuration, dans lequel ledit premier côté (98, 108 ; 99' ; 108') et ledit deuxième côté (99, 109 ; 99', 109') s'écartent l'un de l'autre, en passant des premiers bords respectifs (160, 160') aux deuxièmes bords correspondants (161, 161') ;
ledit premier côté (98, 108 ; 99', 108') et ledit deuxième côté (99, 109 ; 99', 109') étant interposés, le long dudit premier axe (Y), entre ledit premier siège (26) et ledit troisième siège (28) et entre ledit troisième siège (28) et ledit deuxième siège (26) dans ladite seconde configuration dudit poste de conduite (25, 25').

14. Procédé selon la revendication 13, **caractérisé en ce qu'**il comprend l'étape vii) de rotation d'un premier et d'un deuxième côté (98, 108 ; 99, 109) par rapport aux premier et deuxième coussins de siège respectifs (30, 31) ou auxdits premier et deuxième dossiers (40, 41) entre une troisième position et une quatrième position prises lorsque ledit poste de conduite (25) se trouve, respectivement, dans lesdites première et seconde configurations.

15. Procédé selon la revendication 14, **caractérisé en ce que** l'étape vii) comprend les étapes suivantes :
viii) la rotation des premiers demi-côtés (108a, 109a) des premier et deuxième côtés respectifs (108, 109) autour des deuxièmes axes respectifs (C, D) ; et
ix) la rotation des seconds demi-côtés (108b, 109b) des premier et deuxième côtés respectifs (108, 109) autour des troisièmes axes respectifs (E, F).

16. Procédé selon la revendication 13 ou 14, **caractérisé en ce qu'**il comprend les étapes suivantes :
x) le raccordement dudit premier côté (98', 108') et dudit deuxième côté (99', 109') audit châssis (29) de manière amovible ;
xi) le placement dudit premier côté (98', 108') sur un premier côté dudit troisième siège (32) et dudit deuxième côté (99' ; 109') sur un deuxième côté dudit troisième siège (32) opposé audit premier côté, lorsque ledit poste de conduite (25') se trouve dans ladite première configuration ; et
xii) la commutation dudit premier côté (98', 108') et dudit deuxième côté (99', 109') afin de faire passer ledit poste de conduite (25') de ladite première configuration à ladite seconde configuration.
